# EUROPÄISCHE PATENTSCHRIFT

(11) **EP 2 917 597 B1**
(45) Veröffentlichungstag und Bekanntmachung des Hinweises auf die Patenterteilung: **14.09.2016**
(21) Anmeldenummer: 13805749.2
(22) Anmeldetag: 10.10.2013
(51) Int. Cl.: F16C 33/58, F16C 33/64, F16C 33/66, F16C 19/26

(54) **LAUFRING FÜR EIN HÜLSENLAGER**
RACEWAY RING FOR BUSHING TYPE BEARING
BAGUE DE ROULEMENT POUR MANCHON DE SUPPORT

(30) Priorität: 07.11.2012 DE 102012021687
(43) Veröffentlichungstag der Anmeldung: 16.09.2015
(73) Patentinhaber: Schaeffler Technologies AG & Co. KG, 91074 Herzogenaurach (DE)
(72) Erfinder: AKYOL, Ekrem, 91301 Forchheim (DE); SCHÄFERS, Heinz, 91056 Erlangen (DE)
(86) Internationale Anmeldenummer: PCT/DE2013/200213
(87) Internationale Veröffentlichungsnummer: WO 2014/071930

(56) Entgegenhaltungen:
- DE-A1- 2 651 845
- DE-A1- 19 513 668
- DE-A1- 19 649 115
- DE-A1-102006 057 450
- DE-A1-102011 004 199
- JP-A- 2008 101 647
- JP-A- 2010 133 479

## Beschreibung

### Gebiet der Erfindung

Die Erfindung betrifft einen Laufring nach den oberbegriffsbildenden Merkmalen des Patentanspruchs 1 oder nach den oberbegriffsbildenden Merkmalen des unabhängigen Patentanspruchs 5, und sie insbesondere vorteilhaft bei gehäuse- oder wellenbefestigten Hülsenlagern anwendbar.

### Hintergrund der Erfindung

In der Wälzlagertechnik ist es allgemein bekannt, dass Hülsenlager diejenige Bauform von Rollenlagern sind, welche die kleinste radiale Bauhöhe aufweisen und besonders raumsparende und montagefreundliche Lagerungen mit hoher radialer Tragfähigkeit ermöglichen. Derartige, entweder in ein Gehäuse oder auf eine Welle ein-/aufpressbare Hülsenlager werden als wirtschaftliche Alternative zu Zylinderrollenlagern vielfach im Kraftfahrzeug- und Maschinenbau eingesetzt und sind in der Ausführung als gehäusebefestigte Hülsenlager beispielsweise aus der DE 195 12 668 A1 bekannt. Der Laufring solcher Hülsenlager besteht dabei je nach Ausführung als gehäuse- oder wellenbefestigtes Hülsenlager im Wesentlichen aus einem zylindrischen Außenmantel bzw. Innenmantel, dessen Innenumfangsfläche bzw. Außenumfangsfläche als Laufbahn für Lagerrollen ausgebildet ist, sowie aus zwei an die axialen Stirnseiten des Außenmantels bzw. Innenmantels angeformten, radial nach innen bzw. außen gerichtete Borden, die als Axialführung der Lagerrollen vorgesehen sind.

Die Herstellung des Laufrings dieses bekannten Hülsenlagers erfolgt gemäß dem ebenfalls in der DE 195 12 668 A1 beschriebenen Verfahren derart, dass zunächst durch einen ein- oder mehrstufigen Tiefziehvorgang aus einer Ronde ein aus einem Boden und einem Mantel bestehendes topfförmiges Ziehteil geformt wird, das geringfügig länger als die Axialbreite plus eine Bordhöhe eines Laufrings ausgebildet ist und dessen Mantel an seiner dem Boden abgewandten Seite eine verringerte Wandstärke aufweist. In einem zweiten Verfahrensschritt wird dann aus dem Ziehteil ein zentrischer Teil des Bodens derart ausgestanzt, dass ein als Festbord bezeichneter erster Bord am Laufring entsteht und in einem driften Verfahrensschritt wird der Mantel des Ziehteils im Bereich seiner verringerten Wandstärke beschnitten, um den ungleichförmigen Ziehrand am Ziehteil zu entfernen. Anschließend wird dann in einem vierten Verfahrensschritt der Mantel über eine Bördelkante am Beginn der verringerten Wandstärke nach radial innen umgebördelt, so dass ein als Bördelbord bezeichneter zweiter Bord mit einer kleinen Freistellung am Laufring entsteht, und abschließend wird der angeformte Bördelbord in einem fünften Verfahrensschritt noch durch einen Lochvorgang mit dem Durchmesser des Festbordes begradigt.

Nachteilig bei den durch dieses Verfahren hergestellten Laufringen ist jedoch, dass deren Borde fertigungsbedingt unterschiedliche Wandstärken aufweisen, so dass die mit solchen Laufringen ausgebildeten Hülsenlager immer gerichtet in/auf ihrem Lagersitz montiert werden müssen. Dies ist deshalb notwendig, da die zu lagernden Wellen üblicherweise mit einer der Wellendurchbiegung angepassten Profilierung im Laufbahnbereich ausgebildet werden, so dass bei einem seitenverkehrten Einbau des Rollenlagers der Rollensatz außermittig belastet wird und es zu einem schädlichen Axialschub im Rollenlager kommen kann. Außerdem weisen die bekannten Laufringe den Nachteil auf, dass der mit dem Festbord ausgebildete Laufring üblicherweise komplett gehärtet und die Bördelbordseite wieder weichgeglüht wird, um diese nach der Bestückung mit dem Rollenkranz verschließen zu können. Beim Weichglühen der Bördelbordseite wird jedoch unabdingbar auch ein Teil des Laufbahnbereiches wieder weicher, so dass an dieser Stelle der Laufbahn ein erhöhter Verschleiß auftritt, durch den die Lebensdauer des Rollenlagers vermindert wird. Ebenso hat es sich bei solchen Laufringen als nachteilig erwiesen, dass diese nur am Bördelbord eine kleine volumenbegrenzte Freistellung aufweisen, die als zusätzliches Schmiermittelreservoir nutzbar ist, so dass das Hülsenlager in relativ kurzen Intervallen nachgeschmiert werden muss oder eine relativ kurze Lebensdauer aufweist. Die beschriebene Herstellung dieser Laufringe hat darüber hinaus noch den Nachteil, dass durch die relativ hohe Anzahl notwendiger Fertigungsschritte für jeden Laufring relativ hohe Abschnitt- und Werkzeugkosten entstehen.

JP-A-2010133479 offenbart die Merkmale des Oberbegriffs des Anspruchs 1.

### Aufgabe der Erfindung

Ausgehend von den dargelegten Nachteilen des bekannten Standes der Technik ist es somit Aufgabe der Erfindung, einen kostengünstig herstellbaren Laufring für ein Hülsenlager zu konzipieren, der längere Nachschmierintervalle bzw. eine längere Lebensdauer für das Hülsenlager gewährleistet und mit dem die Notwendigkeit der gerichteten Montage des Hülsenlagers entfallen kann.

### Beschreibung der Erfindung

Diese Aufgabe wird erfindungsgemäß bei einem Laufring nach dem Oberbegriff des Anspruchs 1 derart gelöst, dass beide Borde die gleiche Wandstärke aufweisen und beide Borde durch radiales Umbördeln über zwei in die Randbereiche der Innenmantelfläche bzw. Außenmantelfläche einer hohlzylindrischen Ausgangshülse eingeformte Nuten hergestellt sind, die nach dem Bördelvorgang zwei am Übergang der Innenseiten der Borde zur Innenumfangsfläche des Außenmantels bzw. zur Außenumfangsfläche des Innenmantels angeordnete und als volumenvariables Schmiermittelreservoir ausgebildete Freistellungen bilden.

Bevorzugte Ausgestaltungen und Weiterbildungen des erfindungsgemäß ausgebildeten Laufrings werden in den Unteransprüchen 2 bis 4 beschrieben.

Danach ist es gemäß Anspruch 2 bei dem erfindungsgemäß ausgebildeten Laufring vorgesehen, dass beide Borde auch die gleiche Länge aufweisen und ihre Wandstärke zumindest annähernd der Wandstärke des zylindrischen Außenmantels bzw. Innenmantels entspricht. Geringfügige Unterschiede zwischen den Wandstärken des zylindrischen Außenmantels bzw. Innenmantels sowie der Borde können dabei durch Materialverzüge beim Umbördeln der Borde und/oder durch ein spanendes Bearbeiten der als Laufbahn ausgebildeten Innenumfangsfläche des Außenmantels bzw. Außenumfangsfläche des Innenmantels zusammen mit den Innenseiten der Borde entstehen.

Nach Anspruch 3 ist es ein weiteres Merkmal des erfindungsgemäß ausgebildeten Laufrings, dass die hohlzylindrische Ausgangshülse durch einen abgelängten Ringabschnitt eines Rohres oder eines kartuschenförmigen Tiefziehteils mit gleichmäßiger Wandstärke und abgetrennten Boden gebildet wird. Die Verwendung von Rohren für das Abtrennen der Ausgangshülsen hat sich dabei für die Herstellung großer Stückzahlen von Hülsenlagern mit gleichen Außendurchmessern als am kostengünstigsten erwiesen, während Verwendung von kartuschenförmigen Tiefziehteilen für die Herstellung kleinerer Stückzahlen von Hülsenlagern mit unterschiedlichen Außendurchmessern kostengünstiger ist.

Gemäß Anspruch 4 zeichnet sich das erfindungsgemäß ausgebildete Hülsenlager darüber hinaus noch dadurch aus, dass das Einformen der Nuten in die Randbereiche der Innenmantelfläche bzw. Außenmantelfläche der Ausgangshülse bevorzugt spanend durch Einstechdrehen erfolgt. Alternativ ist es auch möglich, die Nuten spanlos durch Rollieren oder dgl. einzuformen, wobei sich Einstechdrehen jedoch als kostengünstigster erwiesen hat, da die Nuten mit einfachen einachsigen Drehmaschinen in die Ausgangshülsen eingearbeitet werden können, die in der Anschaffung gegenüber Rolliermaschinen preiswerter sind. Außerdem kann mit dem Einstechdrehen die Breite für die Nuten so ausgeführt werden, dass die Laufbahn für die Lagerrollen größer ausfällt als bei massiven Rollenlagern mit gleichen Abmessungen, so dass eine größere tragende Länge der Lagerrollen die Traglast des Hülsenlagers erhöht.

Bei einem nicht beanspruchten Laufring, welcher in bekannter Weise aus einem einzelnen topfförmigen Tiefziehteil hergestellt ist und bei dem der eine Bord durch das Ausstanzen eines kreisrunden zentrischen Teils des Bodens des Tiefziehteils hergestellt ist, wird die Aufgabe der Erfindung in ähnlicher Weise dadurch gelöst, dass beide Borde ebenfalls die gleiche Wandstärke aufweisen und nur der andere Bord durch radiales Umbördeln über eine in den freien Randbereich der Innenmantelfläche des Tiefziehteils eingeformte Nut hergestellt ist, die nach dem Bördelvorgang eine am Übergang der Innenseite des Bordes zur Innenumfangsfläche des Außenmantels angeordnete und als volumenvariables Schmiermittelreservoir ausgebildete Freistellung bildet.

Auch bei dieser Ausführungsform eines ausgebildeten Laufrings ist es vorgesehen, dass beide Borde auch die gleiche Länge aufweisen und ihre Wandstärke zumindest annähernd der Wandstärke des zylindrischen Außenmantels entspricht. Das Einformen der Nut in den Randbereich der Innenmantelfläche des Tiefziehteils erfolgt hier jedoch bevorzugt spanlos durch Rollieren, kann aber auch spanend durch Einstechdrehen realisiert werden.

Schließlich ist es noch ein gemeinsames Merkmal der beiden zuvor beschriebenen Ausführungsformen eines Laufrings, dass die Ausgangshülse bzw. das Tiefziehteil aus einem Durchhärtestahl, beispielsweise aus 100Cr6, C80 oder C45, oder aus einem Einsatzhärtestahl, beispielsweise aus 16MnCr5, C16 oder 17Cr13 besteht. Diese Werkstoffe zeichnen sich durch eine gute Umformbarkeit bzw. besondere Eignung zum Streckziehen aus und sind durch ihre guten Überrolleigenschaften besonders geeignet für Hülsenlager.

Zusammenfassend weist der Laufring für ein Hülsenlager somit in allen drei beschriebenen Ausführungsformen gegenüber den aus dem Stand der Technik bekannten Laufringen den Vorteil auf, dass er zwei Borde mit gleicher Borddicke aufweist, so dass ein mit diesem Laufring ausgebildetes Hülsenlager nicht mehr gerichtet montiert werden muss. Durch die Anordnung von einer oder zwei Freistellungen am Übergang der Innenseiten der gebördelten Borde zur Innenumfangsfläche des Außenmantels bzw. zur Außenumfangsfläche des Innenmantels weist ein mit einem solchen Laufring ausgebildetes Hülsenlager darüber hinaus ein größeres Schmiermittelreservoir als herkömmliche Hülsenlager auf, so dass die Nachschmierintervalle und/oder die Lebensdauer des Hülsenlagers wesentlich verlängert werden. Dieses vergrößerte Schmiermittelreservoir kann zusätzlich noch in seinem Volumen bzw. in seiner radialen Ausdehnung variabel gestaltet werden, indem die den Freistellungen zugrunde liegenden Nuten im Laufring mit unterschiedlichen Axialbreiten ausgebildet werden.

### Kurze Beschreibung der Zeichnungen

Ein Laufring für ein Hülsenlager wird nachfolgend in mehreren verschiedenen Ausführungsformen unter Bezugnahme auf die beigefügten Zeichnungen näher erläutert. Dabei zeigen:
- Figur 1: eine Schnittdarstellung eines erfindungsgemäß ausgebildeten Laufrings eines gehäüsebefestigten Hülsenlagers vor dem Umbördeln der Borde;
- Figur 2: eine Schnittdarstellung des erfindungsgemäß ausgebildeten Laufrings gemäß Figur 1 mit umgebördelten Borden;
- Figur 3: eine Schnittdarstellung eines erfindungsgemäß ausgebildeten Laufrings eines wellenbefestigten Hülsenlagers vor dem Umbördeln der Borde;
- Figur 4: eine Schnittdarstellung des erfindungsgemäß ausgebildeten Laufrings gemäß Figur 3 mit umgebördelten Borden;
- Figur 5: eine Schnittdarstellung eines aus einem Tiefziehteil hergestellten ausgebildeten Laufrings eines gehäusebefestigten Hülsenlagers vor dem Umbördeln des Bords;
- Figur 6: eine Schnittdarstellung des Laufrings gemäß Figur 5 mit umgebördeltem Bord.

### Ausführliche Beschreibung der Zeichnungen

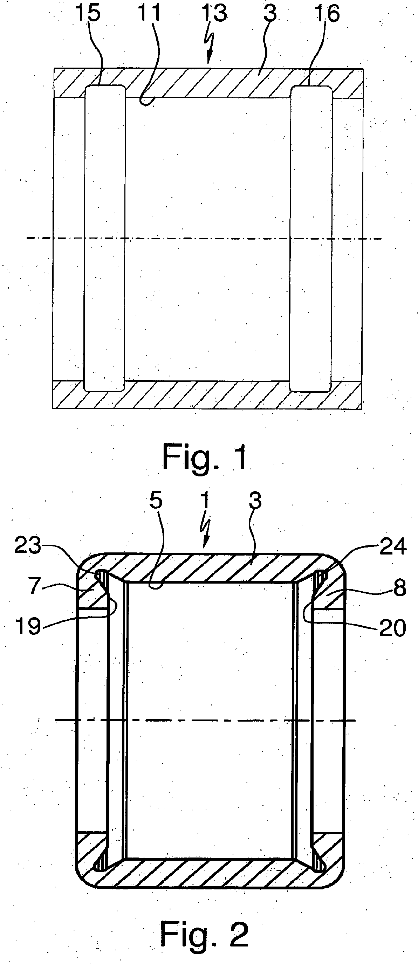

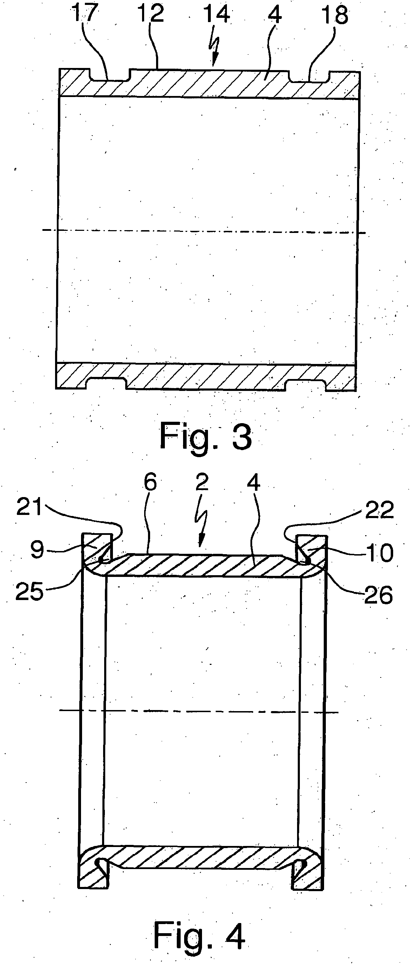

Die Figuren 2 und 4 zeigen deutlich eine erste und eine zweite Ausführungsform von Laufringen 1, 2, wie sie üblicherweise für gehäuse oder wellenbefestigte Hülsenlager zur Anwendung kommen. Diese Laufringe 1, 2 bestehen in bekannter Weise jeweils aus einem zylindrischen Außenmantel 3 bzw. Innenmantel 4, dessen Innenumfangsfläche 5 bzw. Außenumfangsfläche 6 als Laufbahn für nicht dargestellte Lagerrollen ausgebildet ist, sowie aus zwei an die axialen Stirnseiten des Außenmantels 3 bzw. Innenmantels 4 angeformten, radial nach innen bzw. außen gerichtete Borden 7, 8 bzw. 9, 10, die als Axialführung der nicht dargestellten Lagerrollen vorgesehen sind.

Desweiteren geht aus den Figuren 2 und 4 hervor, dass beide Borde 7, 8 bzw. 9, 10 der Laufringe 1, 2 im Unterschied zu herkömmlichen Laufringen die gleiche Wandstärke und zusätzlich auch die gleiche Länge aufweisen und dass ihre Wandstärke zumindest annähernd der Wandstärke des zylinderischen Außenmantels 3 bzw. Innenmantels 4 entspricht. In Zusammenschau mit den Figuren 1 und 3 ist zudem deutlich erkennbar, dass beide Borde 7, 8 bzw. 9, 10 durch radiales Umbördeln über zwei in die Randbereiche der Innenmantelfläche 11 bzw. Außenmantelfläche 12 einer hohlzylindrischen Ausgangshülse 13 bzw. 14 eingeformte Nuten 15, 16 bzw. 17, 18 hergestellt sind, die nach dem Bördelvorgang zwei am Übergang der Innenseiten 19, 20 bzw. 21, 22 der Borde 7, 8 bzw. 9, 10 zur Innenumfangsfläche 5 des Außenmantels 3 bzw. zur Außenumfangsfläche 6 des Innenmantels 4 angeordnete und als volumenvariables Schmiermittelreservoir ausgebildete Freistellungen 23, 24 bzw. 25, 26 bilden. Die hohlzylindrischen Ausgangshülsen 13, 14 sind dabei als abgelängte Ringabschnitte eines Rohres ausgebildet, in deren Randbereiche die Nuten 15, 16 bzw. 17, 18 entweder in die Innenmantelfläche 11 oder in die Außenmantelfläche 12 durch Einstechdrehen eingearbeitet sind.

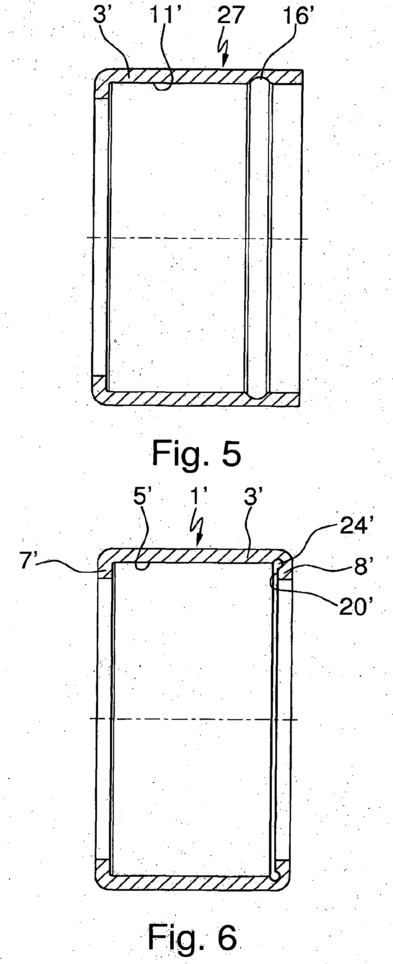

In Figur 6 ist darüber hinaus ein dritte Ausführungsform eines Laufringes 1' für ein gehäusebefestigtes Hülsenlager dargestellt, welcher aus einem in Figur 5 gezeigten einzelnen topfförmigen Tiefziehteil 27 hergestellt ist und im Wesentlichen ebenfalls aus einem zylindrischen Außenmantel 3', dessen Innenumfangsfläche 5' als Laufbahn für Lagerrollen ausgebildet ist, sowie aus zwei an die axialen Stirnseiten des Außenmantels 3' angeformten, radial nach innen gerichtete Borden 7', 8' besteht, die als Axialführung der Lagerrollen vorgesehen sind, wobei der eine Bord 7' durch das Ausstanzen eines kreisrunden zentrischen Teils des Bodens des Tiefziehteils 27 hergestellt ist. Diese Ausführungsform zeichnet sich ebenfalls dadurch aus, dass beide Borde 7', 8' die gleiche Wandstärke aufweisen, unterscheidet sich jedoch von der ersten und zweiten Ausführungsform dadurch, dass nur der andere Bord 8' durch radiales Umbördeln über eine in den freien Randbereich der Innenmantelfläche 11' des Tiefziehteils 27 eingeformte Nut 16' hergestellt ist, die nach dem Bördelvorgang eine am Übergang der Innenseite 20' des Bordes 8' zur Innenumfangsfläche 5' des Außenmantels 3' angeordnete und als volumenvariables Schmiermittelreservoir ausgebildete Freistellung 24' bildet. Auch bei dieser Ausführungsform eines Laufrings 1' ist es vorgesehen, dass beide Borde 7', 8' die gleiche Länge aufweisen und ihre Wandstärke zumindest annähernd der Wandstärke des zylindrischen Außenmantels 3' entspricht und dass das Einformen der Nut 15' in den Randbereich der Innenmantelfläche 11' des Tiefziehteils 27 durch Einstechdrehen erfolgt.

**Bezugszahlenliste**

| | | | |
|---|---|---|---|
| 1 | gehäusebefestigter Laufring | 13 | Ausgangshülse von 1 |
| 1' | Laufring aus einem Tiefziehteil | 14 | Ausgangshülse von 2 |
| 2 | wellenbefestigter Laufring | 15 | linke Nut in 11 |
| 3 | Außenmantel von 1 | 15' | Nut in 11' |
| 3' | Außenmantel von 1' | 16 | rechte Nut in 11 |
| 4 | Innenmantel von 2 | 17 | linke Nut in 12 |
| 5 | Innenumfangsfläche von 1 | 18 | rechte Nut in 12 |
| 5' | Innenumfangsfläche von 1' | 19 | Innenseite von 7 |
| 6 | Außenumfangsfläche von 2 | 19' | Innenseite von 7' |
| 7 | linker Bord von 1 | 20 | Innenseite von 8 |
| 7' | linker Bord von 1' | 21 | Innenseite von 9 |
| 8 | rechter Bord von 1 | 22 | Innenseite von 10 |
| 8' | rechter Bord von 1' | 23 | Freistellung zwischen 19 und 5 |
| 9 | linker Bord von 2 | 23' | Freistellung zwischen 19' und 5' |
| 10 | rechter Bord von 2 | 24 | Freistellung zwischen 20 und 5 |
| 11 | Innenmantelfläche von 13 | 25 | Freistellung zwischen 21 und 6 |
| 11' | Innenmantelfläche von 27 | 26 | Freistellung zwischen 22 und 6 |
| 12 | Außenmantelfläche von 14 | 27 | Tiefziehteil |

## Patentansprüche

1. Laufring (1, 2) für ein Hülsenlager, im Wesentlichen bestehend aus einem zylindrischen Außenmantel (3) bzw. Innenmantel (4), dessen Innenumfangsfläche (5) bzw. Außenumfangsfläche (6) als Laufbahn für Lagerrollen ausgebildet ist, sowie aus zwei an die axialen Stirnseiten des Außenmantels (3) bzw. Innenmantels (4) angeformten, radial nach innen bzw. außen gerichtete Borden (7, 8 bzw. 9, 10), die als Axialführung der Lagerrollen vorgesehen sind, **dadurch gekennzeichnet, dass** beide Borde (7, 8 bzw. 9, 10) die gleiche Wandstärke aufweisen und beide Borde (7, 8 bzw. 9, 10) durch radiales Umbördeln über zwei in die Randbereiche der Innenmantelfläche (11) bzw. Außenmantelfläche (12) einer hohlzylindrischen Ausgangshülse (13 bzw. 14) eingeformte Nuten (15, 16 bzw. 17, 18) hergestellt sind, die nach dem Bördelvorgang zwei am Übergang der Innenseiten (19, 20 bzw. 21, 22) der Borde (7, 8 bzw. 9, 10) zur Innenumfangsfläche (5) des Außenmantels (3) bzw. zur Außenumfangsfläche (6) des Innenmantels (4) angeordnete und als volumenvariables Schmiermittelreservoir ausgebildete Freistellungen (23, 24 bzw. 25, 26) bilden.

2. Laufring (1, 2) nach Anspruch 1, **dadurch gekennzeichnet, dass** beide Borde (7, 8 bzw. 9, 10) auch die gleiche Länge aufweisen und ihre Wandstärke zumindest annähernd der Wandstärke des zylindrischen Außenmantels (3) bzw. Innenmantels (4) entspricht.

3. Laufring (1, 2) nach Anspruch 1, **dadurch gekennzeichnet, dass** die hohlzylindrische Ausgangshülse (13 bzw. 14) durch einen abgelängten Ringabschnitt eines Rohres oder eines kartuschenförmigen Tiefziehteils mit gleichmäßiger Wandstärke und abgetrennten Boden gebildet wird.

4. Laufring (1, 2) nach Anspruch 1, **dadurch gekennzeichnet, dass** das Einformen der Nuten (15, 16 bzw. 17, 18) in die Randbereiche der Innenmantelfläche (11) bzw. Außenmantelfläche (12) der Ausgangshülse (13 bzw. 14) bevorzugt spanend durch Einstechdrehen erfolgt.

## Claims

1. Raceway ring (1, 2) for a drawn cup bearing, substantially consisting of a cylindrical outer shell (3) and inner shell (4), the inner circumferential face (5) and outer circumferential face (6), respectively, of which are configured as a raceway for bearing rollers, and of two rims (7, 8 and 9, 10) which are formed integrally on the axial end sides of the outer shell (3) and inner shell (4) and are directed radically inwards and outwards, respectively, and are provided as axial guidance for the bearing rollers, **characterized in that** both rims (7, 8 and 9, 10) have the same wall thickness, and both rims (7, 8 and 9, 10) are produced by way of radial beading via two grooves (15, 16 and 17, 18) which are formed into the edge regions of the inner shell face (11) and outer shell face (12) of a hollow-cylindrical starting sleeve (13 and 14) and, after the beading operation, form two clearances (23, 24 and 25, 26) which are configured as a variablevolume lubricant reservoir and are arranged at the transition of the inner sides (19, 20 and 21, 22) of the rims (7, 8 and 9, 10) to the inner circumferential face (5) of the outer shell (3) and to the outer circumferential face (6) of the inner shell (4), respectively.

2. Raceway ring (1, 2) according to Claim 1, **characterized in that** both rims (7, 8 and 9, 10) also have the same length, and their wall thickness corresponds at least approximately to the wall thickness of the cylindrical outer shell (3) and inner shell (4), respectively.

3. Raceway ring (1, 2) according to Claim 1, **characterized in that** the hollow-cylindrical starting sleeve (13 and 14) is formed by way of an annular section, which is cut to size, of a tube or a cartridge-shaped deep-drawn part with a uniform wall thickness and detached bottom.

4. Raceway ring (1, 2) according to Claim 1, **characterized in that** the forming of the grooves (15, 16 and 17, 18) into the edge regions of the inner shell face (11) and outer shell face (12), respectively, of the starting sleeve (13 and 14) preferably takes place with the removal of material by way of groove turning.

## Revendications

1. Bague de roulement (1, 2) pour un manchon de support, constituée essentiellement d'une enveloppe extérieure cylindrique (3) ou d'une enveloppe intérieure (4) dont la surface périphérique intérieure (5) ou la surface périphérique extérieure (6) est réalisée sous forme de chemin de roulement pour des rouleaux de palier, et constituée de deux bords (7, 8, respectivement 9, 10) orientés radialement vers l'intérieur ou vers l'extérieur, formés sur les côtés frontaux axiaux de l'enveloppe extérieure (3) ou de l'enveloppe intérieure (4), qui sont prévus en tant que guide axial des rouleaux de palier, **caractérisée en ce que** les deux bords (7, 8, respectivement 9, 10) présentent la même épaisseur de paroi et les deux bords (7, 8, respectivement 9, 10) sont fabriqués par rabattement radial par le biais de deux rainures (15, 16, respectivement 17, 18) formées dans les régions de bord de la surface d'enveloppe intérieure (11) ou de la surface d'enveloppe extérieure (12) d'une douille de sortie cylindrique creuse (13, respectivement 14), lesquelles rainures, après l'opération de rabattement, forment deux zones libres (23, 24, respectivement 25, 26) disposées au niveau de la transition des côtés intérieurs (19, 20, respectivement 21, 22) des bords (7, 8 respectivement 9, 10) à la surface périphérique intérieure (5) de l'enveloppe extérieure (3) ou à la surface périphérique extérieure (6) de l'enveloppe intérieure (4), et réalisées sous forme de réservoir de lubrifiant de volume variable.

2. Bague de roulement (1, 2) selon la revendication 1, **caractérisée en ce que** les deux bords (7, 8, respectivement 9, 10) présentent aussi la même longueur et leur épaisseur de paroi correspond au moins approximativement à l'épaisseur de paroi de l'enveloppe cylindrique extérieure (3) ou de l'enveloppe intérieure (4).

3. Bague de roulement (1, 2) selon la revendication 1, **caractérisée en ce que** la douille de sortie cylindrique creuse (13 respectivement 14) est formée par une portion annulaire coupée à la longueur voulue d'un tube ou d'une partie emboutie profond en forme de cartouche, avec une épaisseur de paroi uniforme et un fond séparé.

4. Bague de roulement (1, 2) selon la revendication 1, **caractérisée en ce que** le formage des rainures (15, 16, respectivement 17, 18) dans les régions de bord de la surface d'enveloppe intérieure (11) ou de la surface d'enveloppe extérieure (12) de la douille de sortie (13, respectivement 14) s'effectue de préférence par enlèvement de copeaux par tournage en plongée.
